# EUROPÄISCHE PATENTSCHRIFT

(11) **EP 1 171 710 B1**
(45) Veröffentlichungstag und Bekanntmachung des Hinweises auf die Patenterteilung: **15.06.2005**
(21) Anmeldenummer: 00922611.9
(22) Anmeldetag: 05.04.2000
(51) Int. Cl.: F04B 15/08, F04B 9/06, F04B 53/12, F04B 23/02

(54) **PUMPENSYSTEM ZUM FÖRDERN VON KRYOGENEN FLÜSSIGKEITEN**
PUMP SYSTEM FOR DELIVERING CRYOGENIC LIQUIDS
SYSTEME DE POMPE POUR LE REFOULEMENT DE LIQUIDES CRYOGENIQUES

(30) Priorität: 08.04.1999 DE 19915847
(43) Veröffentlichungstag der Anmeldung: 16.01.2002
(73) Patentinhaber: Linde Gas Aktiengesellschaft, 82049 Höllriegelskreuth (DE)
(72) Erfinder: DRESLER, Helmut, D-83308 Trostberg (DE)
(74) Vertreter: Zahn, Christoph
(86) Internationale Anmeldenummer: PCT/EP2000/003033
(87) Internationale Veröffentlichungsnummer: WO 2000/061944

(56) Entgegenhaltungen:
- DE-A- 3 149 848
- DE-A- 19 506 582
- DE-B- 1 149 030
- US-A- 3 990 816
- US-A- 5 545 015
- YAMANE K ET AL: "A study on a liquid hydrogen pump with a self-clearance-adjustment structure" INTERNATIONAL JOURNAL OF HYDROGEN ENERGY,GB,ELSEVIER SCIENCE PUBLISHERS B.V., BARKING, Bd. 21, Nr. 8, 1. August 1996 (1996-08-01), Seiten 717-723, XP004041020 ISSN: 0360-3199

## Beschreibung

Die Erfindung betrifft ein Pumpensystem zur Förderung von kryogenen Flüssigkeiten mit einem Behälter zur Aufnahme der kryogenen Flüssigkeit und mindestens einer in dem Behälter, in der kryogenen Flüssigkeit eintauchbar, angeordneten Kolbenpumpe.

Zur Förderung von kryogenen Flüssigkeiten mit Temperaturen von unter -200°C werden bisher in der Regel einzylindrige Pumpen verwendet, welche von oben in ein Isoliergefäß eingeführt werden. Aus montagetechnischen Gründen erfolgt auch die Abführung des Förderstromes über diese obere Pumpenmontageöffnung im Isoliergefäß. Die Befüllung der Gefäße mit den zu fördernden Medien erfolgt meistens von einem großen Vorratstank aus, wobei die Bestimmung der maximalen Füllhöhe in diesen Gefäßen durch Überlaufrohre (Peitrohre) oder Inhaltsanzeigen ermittelt wird. Die Steuerung der maximalen Füllhöhe erfolgt meistens manuell oder über einen durch die Flüssigkeit ausgelösten Kontakt, durch welchen ein Magnetventil in der Zu- oder Abgasleitung angesteuert wird. Da die Pumpen ohne Unterkühlung der Förderflüssigkeit nicht betrieben werden können, besitzen diese großvolumigen Gefäße eine Druckaufbaueinrichtung, wodurch die Förderflüssigkeit kurzzeitig unterkühlt werden kann.

Aus der DE-A-31 49 848 ist eine für den vorgenannten Zweck geeignete Pumpe - es handelt sich hierbei um eine Kolbenpumpe - bekannt.

Da insbesondere Wasserstoff in verflüssigter Form immer mehr an Bedeutung gewinnt und Kraftfahrzeuge bereits mit Wasserstoff betrieben werden, ist es notwendig, geeignete Pumpen zum Betanken dieser Fahrzeuge bereitzustellen.

Die bekannten Pumpen - dies gilt auch für die vorgenannte, aus der DE-A-31 49 848 bekannten Kolbenpumpe - mögen für Laborexperimente mit kleinen Förderströmen und großen zulässigen Druckpulsationen geeignet sein, für eine schnelle, pulsationsfreie Kraftfahrzeugflüssigbetankung ist diese Art von Pumpen aber ungeeignet. Außerdem müssen derartige "Tankstellenpumpen" jederzeit einsatzbereit sein (kaltgestellt), so daß durch die konstruktiv erforderliche kompakte Bauweise bei den bekannten Pumpen ein enormer Wärmefluß in die zu fördernde Flüssigkeit stattfindet und die dadurch für die Funktion erforderliche Flüssigkeitsunterkühlung bald aufgehoben ist.

Der vorliegenden Erfindung liegt die Aufgabe zugrunde, ein Pumpensystem der eingangs genannten Art zur Verfügung zu stellen, mit dem auch größere Mengen an kryogenen Flüssigkeiten, insbesondere auch flüssiger Wasserstoff, wirtschaftlich und zuverlässig gefördert werden können.

Diese Aufgabe wird erfindungsgemäß dadurch gelöst, daß die Kolbenpumpe eine mit dem Kolben verbundene Zugstange aufweist, die aus dem Behälter herausgeführt ist, so daß von außen Zugkräfte aufbringbar sind, und die Zugstange derart mit einer Rückholfeder versehen ist, daß der Kolben entgegen dem Druckhub in eine Ausgangsposition rückholbar ist.

Zweckmäßigerweise sind mehrere solcher Pumpen in den Behälter eingeführt, die druckseitig an ein gemeinsames Druckgehäuse angeschlossen sind. Aufgrund des möglichen Einzeleinbaus und der auf Zug arbeitenden Pumpen werden die für die Wärmeleitung relevanten Querschnitte an den Pumpen sowie am Behälter sehr klein gehalten, wodurch nur eine sehr geringe Wärmeeinbringung in die Behälterflüssigkeit erfolgt. Zur weiteren Verringerung der Wärmeeinbringung in den Behälter ist die Zugstange vorzugsweise über eine Abdichtung aus dem Behälter herausgeführt. Bei der besonders praktikablen Lösung, wonach die Pumpe von oben in den Behälter eingesetzt ist, ist die Zugstange über einen wärmeisolierten Behälterhals aus dem Behälter herausgeführt. Um die Gaswärmeleitung weiter zu minimieren, kann in dem Behälterhals eine Isolierpatrone vorgesehen werden. Außerdem ist der Behälter vorteilhafterweise vakuumisoliert.

Gemäß einer besonders bevorzugten Ausführungsform der Erfindung ist der Pumpenzylinder der Kolbenpumpe durch den Kolben in eine Druckseite und eine Saugseite aufgeteilt, wobei der Kolben einen Kolbenkörper sowie einen beweglich angeordneten Kolbenring aufweist, der bei Bewegung des Kolbens entgegen dem Druckhub am Kolbenkörper derart zur Anlage gebracht wird, daß ein Spalt gebildet wird, der eine Verbindung zwischen der Druckseite und der Saugseite herstellt, und bei Bewegung des Kolbens im Druckhub den Spalt schließt.

Am druckseitigen Ende des Pumpenzylinders ist ein federbelastetes Auslaßventil vorgesehen. Andererseits ist am saugseitigen Ende des Pumpenzylinders ein Bodenventil angeordnet, das mittels der Zugstange derart betätigbar ist, daß es im Druckhub geöffnet und bei Hubumkehr geschlossen ist.

Ferner ist zweckmäßigerweise am druckseitigen Ende des Pumpenzylinders eine Dichtung zur Abdichtung der Zugstange gegenüber dem Pumpengehäuse angeordnet, welche ein durch die Zugstange betätigbares Ventil aufweist, das bei Ausübung von Zugkräften auf die Zugstange geschlossen und bei der Federrückstellung der Zugstange geöffnet ist.

Das erfindungsgemäße Pumpensystem ist für eine ganze Reihe von Anwendungen mit Vorteil einzusetzen. In Verbindung mit einem entsprechenden außerhalb des Behälters angeordneten Taumelscheibenantrieb, der mit den Zugstangen der einzelnen Kolbenpumpen verbunden ist, ist die Anzahl sowie der Durchmesser der einzelnen Pumpen in einem gemeinsamen Druckgehäuse stark variabel, so daß die Pumpen nach diesem Konstruktionsprinzip praktisch allen geforderten Fördermengen bei minimaler Druckpulsation angepaßt werden können. Aufgrund der Vorzüge dieses Pumpenkonzeptes gegenüber dem bisherigen ist der Einsatz solcher Pumpen auch als Bordpumpe bei der neuen Flugzeuggeneration mit Wasserstoffantrieb denkbar. Aufgrund der geringen Massen des Pumpensystems sind die Abkühlverluste sehr gering. Durch den sehr einfachen Konstruktionsaufbau wird eine sehr preiswerte, betriebssichere und technisch hochwertige Pumpe zur Verfügung gestellt.

Im folgenden soll die Erfindung anhand von in den Figuren schematisch dargestellten Ausführungsbeispielen näher erläutert werden.

Es zeigen:
Figur 1 den Einbau einer dreizylindrigen Wasserstoffpumpe in einen Behälter.
Figur 2 einen Vollschnitt einer der drei in das Druckgehäuse eingeschobenen Pumpen.

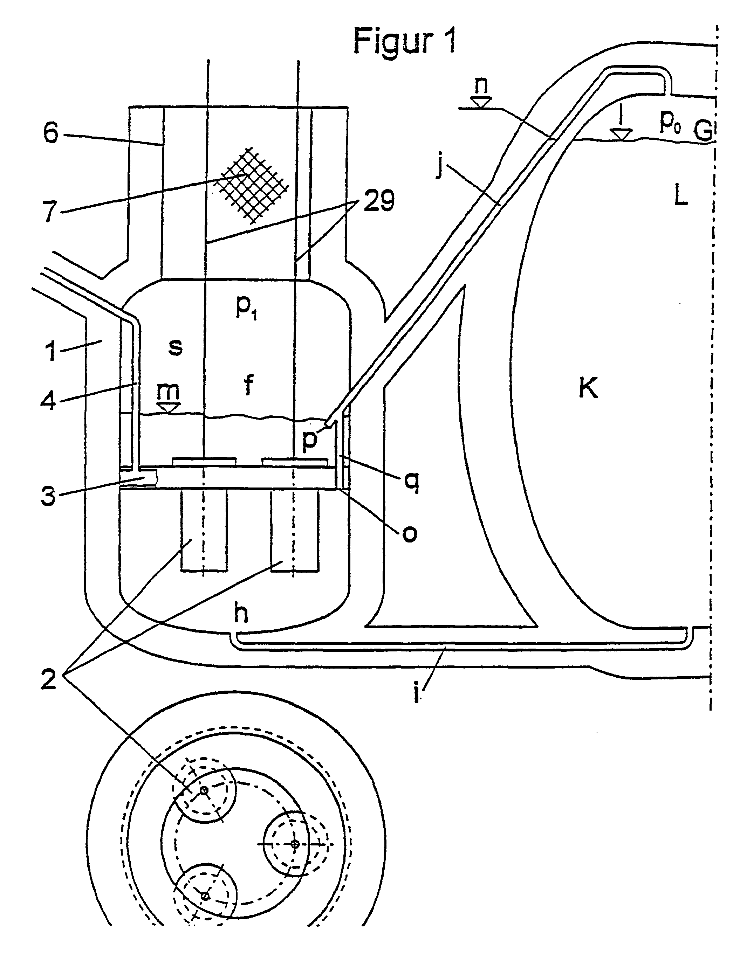

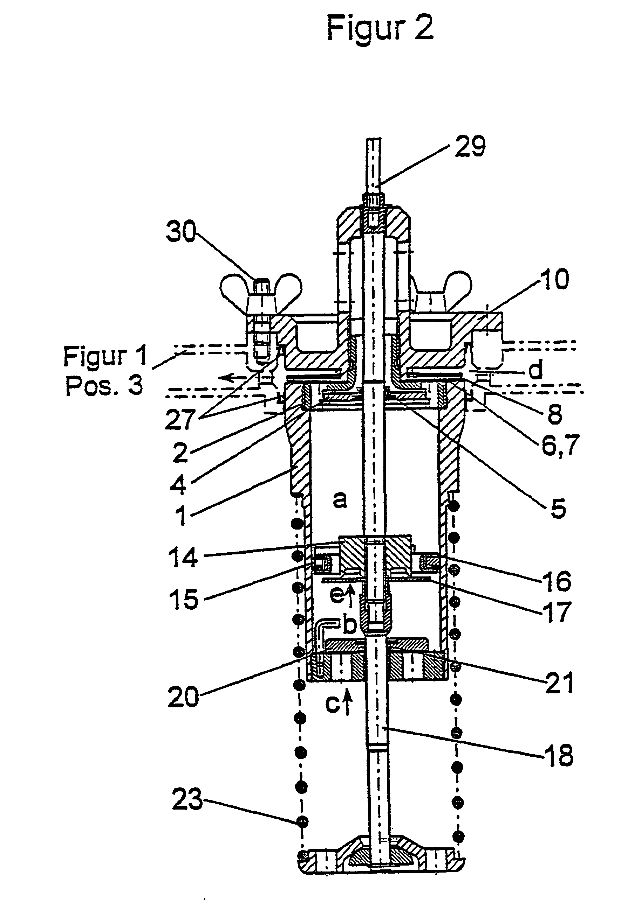

In Figur 1 ist ein Behälter 1 dargestellt, der zur Aufnahme und zur Befestigung der drei von oben einzeln eingeschobenen Pumpen 2 ein fest integriertes, in die Vorratsflüssigkeit eingetauchtes Druckgehäuse 3 aufweist. Durch dieses Druckgehäuse sind die Druckseiten der drei Pumpen 2 miteinander verbunden. Die Fortleitung der weitgehend pulsationsfreien Druckflüssigkeit aus dem Druckgehäuse 3 erfolgt über eine ebenfalls in den Behälter 1 integrierte Druckleitung 4. Durch den Einzeleinbau der auf Zug arbeitenden Pumpen 2 können die für die Wärmeleitung relevanten Querschnitte an den Pumpen 2 sowie dem Behälter 1 sehr klein gehalten werden. Dies wird insbesondere durch die dünnen Zugstangen 29 und das dünnwandige und kleine Behälterhalsrohr 6 erreicht. Insbesondere für den Betrieb mit flüssigem Wasserstoff ist die mit der Erfindung erzielte verminderte Wärmeeinbringung von außergewöhnlicher Bedeutung, da flüssiger Wasserstoff eine sehr tiefe Temperatur von ca. -253°C und sehr geringe Verdampfungswärme aufweist. Erschwerend kommt noch hinzu, daß die Pumpe als "Tankstellenpumpe" immer betriebsbereit (kaltgestellt) sein muß und der durch Wärmeeinbringung entstehende Gasanfall als schädlich gewertet wird. Da Wasserstoffgas den Höchstwert der Gaswärmeleitung aller technischen Gase besitzt, wird im Behälterhalsrohr 6 eine Isolierpatrone 7 aus dünnwandigem Glasgewebe-Epoxitharz mit Isolierschüttung mit den Durchführungen für die Zugstangen 29 verwendet. Durch diese Maßnahme wird die Wärmeeinbringung in den Behälter weiter reduziert.

Das Druckgehäuse 3 dient im Behälter 1 nicht nur der Aufnahme der Pumpen 2, sondern es teilt auch den Behälter 1 in zwei Räume h und f auf. Während der Raum h unmittelbar über die Flüssigzulaufleitung i mit der Flüssigkeit im Vorratstank K in Verbindung steht, wird die Flüssigkeit in den Raum f über die Gasrückführleitung j eingebracht. Hierzu mündet die Gasrückführleitung j in den Räumen h, f sowie im Gasraum des Vorratstankes K, so daß bei o eintretende, mit dem Tank kommunizierende Flüssigkeit über die Rohrmündung p in den Raum f einströmt. Das beim Abkühlen der Pumpe anfallende Gas wird dem Gasraum G des Vorratstanks K zugeführt. Steigt das Flüssigkeitsniveau m über die Rohrmündung p, so erfolgt ein Flüssigkeitsverschluß und das im Raum f befindliche Gas kann nicht entweichen. Da der Druck im Vorratsbehälter P₁ um den Betrag P₀ + Dichte der Flüssigkeit x Höhe größer ist als der Tankdruck P₀, ist auch die sich im Behälter 1 befindende Flüssigkeit im Siedezustand um diesen Betrag wärmer als im Vorratstank K. Beim Pumpbetrieb tritt, wie in Figur 2 dargestellt, die zu fördernde Flüssigkeit über die Bohrungen c in die Pumpen ein. Da diese Eintrittsbohrungen dem Raum h (Figur 1) zugeordnet sind, wird aus diesem die zu fördernde Flüssigkeit entnommen. Dabei senkt sich der in der Gasrückführleitung j stehende Flüssigkeitsspiegel n um den Betrag der Widerstände in der Flüssigkeitszulaufleitung i ab. Die daraus resultierende Druckabsenkung im Behälter 1 bewirkt eine Absenkung des Flüssigkeitsspiegels m, so daß der höhere Gasdruck P₁ über die Rohrmündung p so weit abgebaut wird, bis sich ein neuer Gleichgewichtszustand einstellt und die Flüssigkeit wieder die Gasabfuhr versperrt. Da die aus dem vollen Vorratstank K (hohe Flüssigkeitssäule) strömende Förderflüssigkeit jetzt nicht im Gleichgewicht von Druck und Temperatur ist, sondern die niedrigere Temperatur des Vorratstanks K bei P₀ (Siedezustand) besitzt, erfolgt eine Abkühlung des Temperatumiveaus im Raum h (die Pumpe fördert bei vollem Tank nur die ankommende kältere Flüssigkeit). Aufgrund der räumlichen Aufteilung des Behälters 1 durch das Druckgehäuse 3 in zwei Räume h und f erfolgt ein immer konstantes, sich selbst einregelndes Flüssigkeitsniveau m im Behälter 1 (auch beim Betrieb der Pumpe) sowie eine thermische Trennung der Flüssigkeiten. Durch diese thermische Trennung beider Räume h und f bleibt auch beim Pumpbetrieb die Flüssigkeit im oberen Raum f immer im Siedezustand von P₁ und der Wärmeeinfall über das Halsrohr 6 sowie die in Figur 2 dargestellte Ableitung der geringen Pumpenwärme über das Ventil 4 wird in Gasform über den Flüssigkeitsverschluß p dem Vorratstank K zugeführt. Eine Nichtaufteilung des Behälters hätte zur Folge, daß beim Pumpbetrieb und vollem Vorratstank K die nur sehr geringe und schädliche Wärmeeinbringung über das Behälterhalsrohr 6 nicht ausreichen würde, die ankommende kältere Flüssigkeit entsprechend dem Druck P₁ in den Siedezustand anzuwärmen. Aufgrund dieser Tatsache würde eine Einkondensation von Gas erfolgen und die kalte Flüssigkeit würde im Behälter 1 immer höher steigen und eine Vereisung des Behälteroberteils durch Überfluten verursachen.

In Figur 2 ist ein Volischnitt einer der drei in das Druckgehäuse eingeschobenen Pumpen dargestellt. Die am Druckgehäuse (Figur 1, Bezugsziffer 3) mittels Schrauben 30 befestigte Pumpe weist einen Pumpenzylinder 1 auf, welcher über ein Strömungsteil 2 mit einem Deckelflansch 10 verschraubt ist. Dabei wird ein Ringspalt d gebildet, in welchem ein mit einer Tellerfeder 8 belastetes Membran-Druckventil 6, 7 angebracht ist. Durch das Vorhandensein dieses Ringspaltes d sowie dessen beidseitiger Abdichtung 27 wird der Einzeleinbau der Pumpen in das gemeinsame Druckgehäuse möglich.

Die drei Pumpen werden durch einen nicht dargestellten, am Behälterdeckel befestigten Taumelscheibenantrieb betätigt. Im Behälter, der nur wenige Liter Fassungsvermögen aufweist, befindet sich die zu fördernde kryogene Flüssigkeit. Die Übertragung der Zugkräfte für den Pumpendruckhub vom Antrieb zu den in die Behälterflüssigkeit eingetauchten Pumpen erfolgt über die im Behälterdeckel abgedichteten Zugstangen 29. Bei Hubumkehr werden die Kolben 14, 17 durch die Kraft der Federn 23 in eine Ausgangsposition entgegen dem Druckhub gebracht. Hierbei wird ein gehaltener, durch Federn an den Pumpenzylinder 1 angedrückter Kolbenring 15, 16 an Stegen des Kolbenkörpers 14 zur Anlage gebracht. Über den sich so einstellenden Spalt wird die Flüssigkeit aus dem vorausgegangenen Hubzyklus auf die Druckseite a des Kolbens drucklos umgeschoben. Gleichzeitig wurde bei diesem Hubbeginn ein Ventil 4, in welchem eine Dichtung 5 zur Abdichtung der Zugstange 29 angebracht ist, durch die Zugstange 29 über die Reibung zwingend geöffnet. Hierbei wurde die durch die Kolbenringreibung erzeugte Wärme abgeführt, so daß hierdurch stets eine optimale Zylinderfüllung garantiert wird. Durch dieses Verfahren ändert sich auch die Temperatur der Druckflüssigkeit gegenüber der Vorratsflüssigkeit nicht, was sich positiv auf die Messung der Abgabemenge auswirkt.

Bei Hubumkehr wird durch die Zugstange 29 erst das Ventil 4 geschlossen, ehe der Kolbenring 15, 16 den Spalt am Kolbenkörper 14 schließt und die Druckflüssigkeit über das, durch die Feder 8 belastete Membran-Auslaßventil 6, 7 aus dem Pumpenzylinder 1 in das gemeinsame Druckgehäuse (Figur 1, Bezugsziffer 3) geschoben wird.

Bei Überschreitung des Auslegedruckes (maximaler Förderdruck) wird durch den Kolbenring 15, 16 ein als Tellerfeder ausgebildeter Druckbegrenzer 17 vom Kolbenkörper 14 gedrückt und der Überdruck über die Bohrungen e abgebaut. Zum Zeitpunkt dieser Hubumkehr wurde auch sofort ein am unteren Pumpenzylinderende befindliches Bodenventil 20, welches über eine definierte Reibung einer Dichtung 21 auf dem unteren Teil 18 der Zugstange 29 geöffnet wird, geöffnet. Es kann nun über die Bohrungen c die Vorratsflüssigkeit, ohne ein Ventil öffnen zu müssen, druckverlustfrei in das vom Kolben 14, 17 freigegebene Volumen b in den Pumpenzylinder nachströmen. Kurz vor dem oberen Totpunkt wird aufgrund der Durchmesserverkleinerung der Zugstange 18 die Reibung zwischen dieser und dem Bodenventil 20 aufgehoben und das Bodenventil 20 schließt durch das eigene Gewicht.

Mit der beschriebenen Pumpenanordnung ist es möglich, Flüssigkeiten auch mit kleinen Verdampfungswärmen, wie z.B. flüssigen Wasserstoff im Siedezustand (ohne statische Säule) mit gutem Förderwirkungsgrad zu pumpen. Da durch die Zwangsöffnung des Ventils 4 die Erwärmung des Pumpenzylinders ausgeschlossen wird, erfolgt bei jedem Hub eine optimale Zylinderfüllung, wobei die sonst übliche Anwärmung der Förderflüssigkeit verhindert wird.

## Patentansprüche

1. Pumpensystem zur Förderung von kryogenen Flüssigkeiten mit einem Behälter (1), zur Aufnahme der kryogenen Flüssigkeit und mindestens einer in dem Behälter (1), in der kryogenen Flüssigkeit (h) eintauchbar, angeordneten Kolbenpumpe (2), **dadurch gekennzeichnet, daß** die Kolbenpumpe (2) eine mit dem Kolben (14, 17) verbundene Zugstange (29) aufweist, die aus dem Behälter (1) herausgeführt ist, so daß von außen Zugkräfte aufbringbar sind, und die Zugstange (29) derart mit einer Rückholfeder (23) versehen ist, daß der Kolben (14, 17) entgegen dem Druckhub in eine Ausgangsposition rückholbar ist.

2. Pumpensystem nach Anspruch 1, **dadurch gekennzeichnet, daß**
a) der Pumpenzylinder (1) der Kolbenpumpe durch den Kolben (14,17) in eine Druckseite (a) und eine Saugseite (b) aufgeteilt ist, wobei der Kolben (14, 17) einen Kolbenkörper (14) sowie einen beweglich angeordneten Kolbenring (15, 16) aufweist, der bei Bewegung des Kolbens (14, 17) entgegen dem Druckhub am Kolbenkörper (14) derart zur Anlage gebracht wird, daß ein Spalt gebildet wird, der eine Verbindung zwischen der Druckseite (a) und der Saugseite (b) herstellt, und bei Bewegung des Kolbens (14, 17) im Druckhub den Spalt schließt,
b) am druckseitigen Ende des Pumpenzylinders (1) ein federbelastetes Auslaßventil (6, 7) vorgesehen ist, und
c) am saugseitigen Ende des Pumpenzylinders (1) ein Bodenventil (20) angeordnet ist, das mittels der Zugstange (20) derart betätigbar ist, daß es im Druckhub geöffnet und bei Hubumkehr geschlossen ist.

3. Pumpensystem nach Anspruch 1 oder 2, **dadurch gekennzeichnet, daß** am druckseitigen Ende des Pumpenzylinders (1) eine Dichtung (5) zur Abdichtung der Zugstange (29) gegenüber dem Pumpengehäuse angeordnet ist, welche ein durch die Zugstange (29) betätigbares Ventil (4) aufweist, das bei Ausübung von Zugkräften auf die Zugstange (2) geschlossen und bei der Federrückstellung der Zugstange (29) geöffnet ist.

4. Pumpensystem nach einem der Ansprüche 1 bis 3, **dadurch gekennzeichnet, daß** die Kolbenpumpe von oben in den Behälter eingeschoben ist, so daß die Saugseite der Kolbenpumpe in die kryogene Flüssigkeit eintauchbar ist und die Zugstange (29) über ein am oberen Ende des Behälters angeordnetes Halsrohr aus dem Behälter herausgeführt ist.

5. Pumpensystem nach einem der Ansprüche 1 bis 4, **dadurch gekennzeichnet, daß** der Behälter vakuumisoliert ist.

6. Pumpensystem nach einem der Ansprüche 1 bis 5, **dadurch gekennzeichnet, daß** mehrere (d.h. mindestens zwei) Kolbenpumpen im Behälter angeordnet sind, die druckseitig an ein gemeinsames Druckgehäuse angeschlossen sind.

7. Pumpensystem nach Anspruch 6, **dadurch gekennzeichnet, daß** die Zugstangen (29) der einzelnen Kolbenpumpen mit einem außerhalb des Behälters angeordneten Taumelscheibenantrieb verbunden sind.

## Claims

1. Pump system for delivering cryogenic liquids, having a vessel (1) for holding the cryogenic liquid and at least one piston pump (2) which is arranged in the vessel (1) such that it can be immersed in the cryogenic liquid (h), **characterized in that** the piston pump (2) has a tie rod (29) which is connected to the piston (14, 17) and is led out of the vessel (1), so that tensioning forces can be applied from the outside, and the tie rod (29) is provided with a return spring (23), in such a manner that the piston (14, 17) can be returned to a starting position in the opposite direction to the pressure stroke.

2. Pump system according to Claim 1, **characterized in that**
a) the pump cylinder (1) of the piston pump is divided into a pressure side (a) and a suction side (b) by the piston (14, 17), the piston (14, 17) having a piston body (14) and a moveably arranged piston ring (15, 16) which, when the piston (14, 17) is moving counter to the pressure stroke, is brought to bear against the piston body (14) in such a manner that a gap is formed producing a connection between the pressure side (a) and the suction side (b), and which closes the gap during the movement of the piston (14, 17) in the pressure stroke,
b) a spring-loaded outlet valve (6, 7) is provided at the pressure-side end of the pump cylinder (1), and
c) a bottom valve (20), which can be actuated by means of the tie rod (20) in such a manner that it is open in the pressure stroke and closed during the stroke reversal, is arranged at the suction-side end of the pump cylinder (1).

3. Pump system according to Claim 1 or 2, **characterized in that** a seal (5) for sealing off the tie rod (29) with respect to the pump casing is arranged at the pressure-side end of the pump cylinder (1), which seal has a valve (4) which can be actuated by the tie rod (29) and is closed when tensile forces are acting on the tie rod (2) and open during the spring return of the tie rod (29).

4. Pump system according to one of Claims 1 to 3, **characterized in that** the piston pump is inserted into the vessel from above, so that the suction side of the piston pump can be immersed in the cryogenic liquid and the tie rod (29) is led out of the vessel via a neck tube arranged at the upper end of the vessel.

5. Pump system according to one of Claims 1 to 4, **characterized in that** the vessel is vacuum-insulated.

6. Pump system according to one of Claims 1 to 5, **characterized in that** a plurality of (i.e. at least two) piston pumps are arranged in the vessel and on the pressure side are connected to a common pressure housing.

7. Pump system according to Claim 6, **characterized in that** the tie rods (29) of the individual piston pumps are connected to a swash plate drive arranged outside the vessel.

## Revendications

1. Système de pompe pour le refoulement de liquides cryogéniques, comprenant un récipient (1) pour recevoir le liquide cryogénique et au moins une pompe à piston (2) disposée dans le récipient (1), pouvant plonger dans le liquide cryogénique (h), **caractérisé en ce que** la pompe à piston (2) présente une tige de traction (29) connectée au piston (14, 17), laquelle est guidée hors du récipient (1) de sorte que l'on puisse appliquer des forces de traction depuis l'extérieur, et la tige de traction (29) est pourvue d'un ressort de rappel (23) de telle sorte que le piston (14, 17) puisse être ramené dans une position de départ à l'encontre de la course de compression.

2. Système de pompe selon la revendication 1, **caractérisé en ce que**
a) le cylindre de pompe (1) de la pompe à piston est divisé par le piston (14, 17) en un côté refoulement (a) et un côté aspiration (b), le piston (14, 17) présentant un corps de piston (14) ainsi qu'un segment de piston (15, 16) disposé mobile, lequel est amené en appui contre le corps de piston (14) lors du déplacement du piston (14, 17) à l'encontre de la course de compression, de telle sorte qu'il se forme une fente qui produit une liaison entre le côté refoulement (a) et le côté aspiration (b), et qui, lors du déplacement du piston (14, 17) dans le sens de la course de compression, ferme la fente,
b) on prévoit à l'extrémité du côté refoulement du cylindre de pompe (1) une soupape de sortie sollicitée par ressort (6, 7), et
c) on dispose à l'extrémité du côté aspiration du cylindre de pompe (1) une soupape de fond (20) qui peut être actionnée au moyen de la tige de traction (29) de telle sorte qu'elle soit ouverte pendant la course de compression et fermée lors de l'inversion de la course.

3. Système de pompe selon la revendication 1 ou 2, **caractérisé en ce que** l'on prévoit à l'extrémité du côté refoulement du cylindre de pompe (1) un joint d'étanchéité (5) pour l'étanchéité de la tige de traction (29) par rapport au carter de la pompe, lequel présente une soupape (4) pouvant être actionnée par la tige de traction (29), qui est fermée lorsque des forces de traction sont exercées sur la tige de traction (29) et qui est ouverte lors du rappel par le ressort de la tige de traction (29).

4. Système de pompe selon l'une quelconque des revendications 1 à 3, **caractérisé en ce que** la pompe à piston est enfoncée par le haut dans le récipient de sorte que le côté aspiration de la pompe à piston puisse être plongé dans le liquide cryogénique et que la tige de traction (29) soit guidée hors du récipient par le biais d'un col disposé à l'extrémité supérieure du récipient.

5. Système de pompe selon l'une quelconque des revendications 1 à 4, **caractérisé en ce que** le récipient est isolé par le vide.

6. Système de pompe selon l'une quelconque des revendications 1 à 5, **caractérisé en ce que** plusieurs (c'est-à-dire au moins deux) pompes à piston sont disposées dans le récipient, lesquelles sont raccordées à un logement sous pression commun du côté refoulement.

7. Système de pompe selon la revendication 6, **caractérisé en ce que** les tiges de traction (29) des pompes à piston individuelles sont connectées à un entraînement par disque en nutation disposé en dehors du récipient.
